(19)

Europäisches
Patentamt
European
Patent Office
Office européen
des brevets

(11)  **EP 4 768 525 A1**

(12)  **EUROPEAN PATENT APPLICATION**
published in accordance with Art. 153(4) EPC

(43) Date of publication:
**01.07.2026  Bulletin 2026/27**

(21) Application number: **24859496.2**

(22) Date of filing: **16.08.2024**

(51) International Patent Classification (IPC):
***C08J 5/04*** *(2006.01)*

(52) Cooperative Patent Classification (CPC):
**C08J 5/04**

(86) International application number:
**PCT/JP2024/029181**

(87) International publication number:
**WO 2025/047461 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.08.2023  JP 2023137291**

(71) Applicant: **Kuraray Co., Ltd.
Kurashiki-shi, Okayama 710-0801 (JP)**

(72) Inventor: **MOMMA Yu
Tsukuba-shi, Ibaraki 305-0841 (JP)**

(74) Representative: **Müller-Boré & Partner
Patentanwälte PartG mbB
Friedenheimer Brücke 21
80639 München (DE)**

(54)  **COMPOSITE MATERIAL, MOLDED BODY, AND METHOD FOR MANUFACTURING COMPOSITE MATERIAL**

(57)     Provided is a composite material containing: a thermoplastic resin; and continuous fibers, in which fibers constituting the continuous fibers contain at least a group of fibers aligned along a first fiber direction which runs along a single direction, and in which a surface kurtosis (Rku) in a direction intersecting the first fiber direction, on at least one main surface among a first main surface and a second main surface of the composite material, is 3.0 or more.

EP 4 768 525 A1

**Description**

Technical Field

The present invention relates to a composite material, molded body, and a method for producing composite material.

Background Art

A composite material containing a resin and fibers is referred to as fiber reinforced plastic (FRP). Examples of composite materials containing a thermoplastic resin and continuous fibers include organo sheets and UD tapes (Unidirectional Tape). These materials are highly versatile due to their high mechanical strength and excellent moldability.
As composite materials, composite materials focusing on surface roughness have been proposed (Patent Literatures 1 to 5). Patent Literatures 1 to 4 describe composite materials excellent in surface-smoothness. Patent Literature 5 describes a composite material on which an uneven shape formed on a roll is transformed.

Citation List

Patent Literature

PTL 1: JP 2022-150747 A
PTL 2: WO 2020/196600 A1
PTL 3: WO 2017/203893 A1
PTL 4: JP H05-098042 A
PTL 5: JP 2000-102978 A

Summary of Invention

Technical Problem

However, as a result of investigations conducted by the present inventors, it was found that, even in the case of a composite material in which surface-smoothness is controlled, there are cases where the material is likely to peel off when used with stacked. Therefore, there is a demand for composite materials having excellent peel force (resistance to peeling) when used with stacked.
The present invention is to provide a composite material having excellent peel force when used with stacked, a molded body formed from the composite material, and a method for producing the composite material.

Solution to Problem

As a result of intensive studies to solve the above problems, the present inventors conceived the present invention described below and found that the problems can be solved.
That is, the present invention is as follows.
[1] A composite material containing:

a thermoplastic resin; and
continuous fibers,
in which fibers constituting the continuous fibers comprise at least a group of fibers aligned along a first fiber direction which runs along a single direction,
in which a surface kurtosis (Rku) in a direction intersecting the first fiber direction, on at least one main surface among a first main surface and a second main surface of the composite material, is 3.0 or more.

[2] The composite material according to the above item [1],
in which the continuous fibers are unidirectional fibers aligned only along the first fiber direction.
[3] The composite material according to the above item [1] or [2],

in which the thermoplastic resin comprises a polyamide resin.

[4] The composite material according to the above item [3],

in which the polyamide comprises a semi-aromatic polyamide resin.

[5] The composite material according to any one of the above items [1] to [4],

in which the continuous fibers comprise at least one selected from the group consisting of carbon fibers, glass fibers, ceramic fibers, synthetic fibers, natural fibers, and metal fibers.

[6] The composite material according to any one of the above items [1] to [5],

in which the continuous fibers comprise carbon fibers.

[7] The composite material according to any one of the above items [1] to [6],

in which a fiber volume fraction (Vf) of the composite material is 30% or more and 70 % or less.

[8] The composite material according to any one of the above items [1] to [7],

in which a thickness of the composite material is 0.10 mm or more and 0.30 mm or less.

[9] A molded body composed of the composite material according to any one of the above items [1] to [8].

[10] A method for producing a composite material comprising a thermoplastic resin and continuous fibers, comprising:

mixing a thermoplastic resin in a molten state and continuous fibers;

discharging the obtained melt at a temperature higher than a glass transition temperature of the thermoplastic resin; and

bringing the discharged melt into contact with a smooth-surfaced cooling element within 5 seconds to cool the melt to a temperature lower than the glass transition temperature of the thermoplastic resin and obtain the composite material.

[11] The method for producing a composite material according to the above item [10],

in which the melt is cooled using a cooling roll as the cooling element.

[12] The method for producing a composite material according to the above items [11],

in which a gaseous coolant is brought into contact with a surface of the melt opposite to the surface of the melt which contacts the cooling roll.

Advantageous Effects of Invention

According to the present invention, a composite material having excellent peel force when used with stacked, a molded body formed from the composite material, and a method for producing the composite material can be provided.

Description of Embodiments

The following description is based on an example of an embodiment of the present invention (hereinafter, sometimes referred to as "the present embodiment"). However, embodiments described below are examples for embodying the technical idea of the present invention, and the present invention is not limited to the following description.

In addition, in the description herein, preferred modes of the embodiments are shown, but a combination of two or more of individual preferred modes is also a preferred mode. Regarding the matters indicated by numerical ranges, in a case where there are several numerical ranges, it is possible to selectively combine a lower limit value and an upper limit value thereof to obtain a preferred mode.

In the description herein, when there is a description pertaining to a numerical range of "XX to YY", the description means "XX or more and YY or less".

In the description herein, "- unit" ("-" herein represents a monomer) means a "constituent unit derived from -". For example, a "dicarboxylic acid unit" means a "constituent unit derived from dicarboxylic acid", and a "diamine unit" means a "constituent unit derived from diamine".

<Composite material>

A composite material according to the present embodiment is a composite material containing a thermoplastic resin and continuous fibers, in which fibers constituting the continuous fibers contain at least a group of fibers aligned along a first fiber direction which runs along a single direction, in which a surface kurtosis (Rku) in a direction intersecting the first fiber direction, on at least one main surface among a first main surface and a second main surface of the composite material, is 3.0 or more. By using this, a composite material having excellent peel force when used with stacked, a molded body formed from the composite material, and a method for producing the composite material can be provided.

Here, in the present invention, the first fiber direction refers to the MD direction.

Kurtosis is generally a parameter which indicates the "sharpness". As elements that constitute the sharpness, the peaks and the tails on the surface to be measured are considered. When the peaks and the tails follow a normal distribution, a value of the surface kurtosis Rku is 3.0. When the surface kurtosis Rku exceeds 3.0, it indicates that the sharpness of the peaks on the surface is high and the tails are long. Kurtosis can be measured using a surface roughness measuring instrument. The surface kurtosis Rku is specifically measured in accordance with JIS B 0601:2001, by the method described in the Examples section. In the present embodiment, the surface kurtosis Rku is measured in a direction perpendicular to the first fiber direction of the continuous fibers in the composite material. The surface kurtosis Rku is measured at multiple locations, and the average value of the measured values is calculated and adopted as the value of the surface kurtosis Rku.

In the present embodiment, the surface kurtosis Rku is preferably greater than 3.0 from the viewpoint of more significantly achieving the effects of the present invention, more preferably 3.1 or more, further preferably 3.3 or more, still more preferably 3.5 or more, particularly preferably 3.8 or more, and more particularly preferably 4.0 or more. In the present embodiment, the upper limit of the surface kurtosis Rku is not particularly limited as long as it is produced by the method described below, however, it may be, for example, 6.5 or less, or 5.5 or less. The surface kurtosis Rku can be adjusted, for example, in accordance with the method for producing the composite material described below.

The composite material according to the present embodiment has a shape having a first main surface and a second main surface, such as a sheet shape or a tape shape. The surface to be measured for surface kurtosis Rku may be at least one main surface among the first main surface and the second main surface of the composite material according to the present embodiment. In other words, a composite material having one or two main surfaces with a surface kurtosis Rku value of 3.0 or more constitutes the composite material of the present embodiment. The composite material according to the present embodiment preferably has a surface kurtosis (Rku) of 3.0 or more on both the first main surface and the second main surface, thereby achieving the effects of the present invention on both sides.

Hereinafter, each component of the composite material according to the present embodiment will be described.

[Thermoplastic Resin]

The thermoplastic resin used in the present embodiment is not particularly limited as long as it can constitute the matrix resin of the composite material, and may be a crystalline resin or an amorphous resin, and may contain both a crystalline resin and an amorphous resin.

Examples of the thermoplastic resin include: polyolefin resins such as polyethylene resin, polypropylene resin, and copolymers or blends thereof; polyamide resins; aromatic polyester resins such as polyethylene terephthalate resin (PET), polybutylene terephthalate resin (PBT), polytrimethylene terephthalate (PTT) resin, and polyethylene naphthalate (PEN) resin; aliphatic polyester resins such as polycarbonate resins, polystyrene-based resins (such as polystyrene resin, AS resin, and ABS resin), and polylactic acid-based resins; and other thermoplastic resins including polyacetal (POM), polyphenylene sulfide (PPS), polyketone (PK) resin, polyether ketone (PEK) resin, polyetheretherketone (PEEK), polyaryletherketone (PAEK), polyetherketoneketone (PEKK), polyarylate (PAR) resin, polyether nitrile (PEN) resin, polysulfone, polyethersulfone, polythioethersulfone, polyarylate, polyimide, polyamide-imide (PAI), polymethyl methacrylate, polyether sulfone (PES), polytetrafluoroethylene (PTFE), polyvinylidene fluoride (PVDF), polyacrylonitrile, polyurethane, polyvinyl chloride, and liquid crystal polyester. These may be used alone or in combination.

From the viewpoint of excellent mechanical strength and heat resistance, it is preferable that the thermoplastic resin contains a polyamide resin. It is more preferable that the thermoplastic resin contains at least one selected from aliphatic polyamide resins, alicyclic polyamide resins, and semi-aromatic polyamide resins. From the viewpoint of further improved mechanical strength and heat resistance, it is more preferable that the thermoplastic resin contains at least one selected from the semi-aromatic polyamide resin, and it is more particularly preferable that it contains a semi-aromatic polyamide resin containing a diamine unit mainly containing an aliphatic diamine unit and a dicarboxylic acid unit mainly containing an aromatic dicarboxylic acid unit.

Herein, the aliphatic polyamide resin refers to a resin including a diamine unit mainly containing aliphatic diamine units and an aliphatic dicarboxylic acid unit. An alicyclic polyamide resin refers to a resin including a compound in which at least one of the dicarboxylic acid or diamine, which are monomers constituting the polyamide, has an alicyclic chemical structure. The semi-aromatic polyamide resin refers to a resin including a polyamide containing a diamine unit mainly containing an aliphatic diamine unit and a dicarboxylic acid unit mainly composed of an aromatic dicarboxylic acid, or a polyamide containing a dicarboxylic acid unit mainly containing an aliphatic dicarboxylic acid unit and a diamine unit mainly containing an aromatic diamine unit. Herein, "mainly containing" means constituting 50 to 100 mol% of the total units, preferably 60 to 100 mol%.

Examples of the dicarboxylic acid units include constituent units derived from aliphatic dicarboxylic acids such as oxalic acid, malonic acid, succinic acid, glutaric acid, adipic acid, pimelic acid, suberic acid, azelaic acid, sebacic acid, undecanedicarboxylic acid, dodecanedicarboxylic acid, dimethylmalonic acid, 3,3-diethylsuccinic acid, 2,2-dimethylglutaric acid, 2-methyladipic acid, and trimethyladipic acid; alicyclic dicarboxylic acids such as 1,3-cyclopentanedicarboxylic acid, 1,3-cyclohexanedicarboxylic acid, 1,4-cyclohexanedicarboxylic acid, cycloheptanedicarboxylic acid, cyclooctanedicarboxylic acid, and cyclodecanedicarboxylic acid; and aromatic dicarboxylic acids such as isophthalic acid, terephthalic acid, 1,4-naphthalenedicarboxylic acid, 2,6-naphthalenedicarboxylic acid, 2,7-naphthalenedicarboxylic acid, diphenic acid, 4,4'-biphenyldicarboxylic acid, diphenylmethane-4,4'-dicarboxylic acid, and diphenylsulfone-4,4'-dicarboxylic acid. These units may be one species or two or more species.

From the viewpoint of mechanical strength, heat resistance, and chemical resistance, it is preferable that the dicarboxylic acid units contain aromatic dicarboxylic acid units; more preferably, 40 to 100 mol% of the dicarboxylic acid units are aromatic dicarboxylic acid units; further preferably, 60 to 100 mol% of the dicarboxylic acid units are aromatic dicarboxylic acid units; and particularly preferably, 80 to 100 mol% of the dicarboxylic acid units are aromatic dicarboxylic acid units.

From the viewpoint of mechanical strength, heat resistance, and chemical resistance, it is also preferable that the aromatic dicarboxylic acid units contain terephthalic acid units.

The polyamide resin may also contain constituent units derived from polycarboxylic acids having a valency of three or more, such as trimellitic acid, trimesic acid, or pyromellitic acid, within a range in which melt molding is possible.

Examples of the diamine units include constituent units derived from aliphatic diamines such as ethylenediamine, 1,2-propanediamine, 1,3-propanediamine, 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, 1,12-dodecanediamine, 1,1-dimethyl-1,4-butanediamine, 1-ethyl-1,4-butanediamine, 1,2-dimethyl-1,4-butanediamine, 1,3-dimethyl-1,4-butanediamine, 1,4-dimethyl-1,4-butanediamine, 2,3-dimethyl-1,4-butanediamine, 2-ethyl-1,4-butanediamine, 2-methyl-1,5-pentanediamine, 3-methyl-1,5-pentanediamine, 2-propyl-1,6-hexanediamine, 2,5-dimethyl-1,6-hexanediamine, 2,4-dimethyl-1,6-hexanediamine, 3,3-dimethyl-1,6-hexanediamine, 2,2-dimethyl-1,6-hexanediamine, 2-ethyl-1,6-hexanediamine, 2,2,4-trimethyl-1,6-hexanediamine, 2,4,4-trimethyl-1,6-hexanediamine, 2-propyl-1,6-hexanediamine, 2,4-diethyl-1,6-hexanediamine, 2-ethyl-1,7-heptanediamine, 2,2-dimethyl-1,7-heptanediamine, 2,3-dimethyl-1,7-heptanediamine, 2,4-dimethyl-1,7-heptanediamine, 2,5-dimethyl-1,7-heptanediamine, 2-methyl-1,8-octanediamine, 3-methyl-1,8-octanediamine, 4-methyl-1,8-octanediamine, 1,3-dimethyl-1,8-octanediamine, 1,4-dimethyl-1,8-octanediamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-dimethyl-1,8-octanediamine, 4,4-dimethyl-1,8-octanediamine, 2-ethyl-1,8-octanediamine, and 5-methyl-1,9-nonanediamine; alicyclic diamines such as cyclohexanediamine, methylcyclohexanediamine, isophoronediamine, norbornanedimethylamine, and tricyclodecanedimethyldiamine; and aromatic diamines such as p-phenylenediamine, m-phenylenediamine, p-xylylenediamine, m-xylylenediamine, 4,4'-diaminodiphenylmethane, 4,4'-diaminodiphenyl sulfone, and 4,4'-diaminodiphenyl ether. These units may be one species or two or more species.

As the diamine units, from the viewpoint of strength under high temperature and high humidity conditions, it is preferable that the diamine units contain aliphatic diamine units having 6 to 12 carbon atoms. Preferably, 60 to 100 mol% of the diamine units are aliphatic diamine units having 6 to 12 carbon atoms, more preferably, 70 to 100 mol% of the diamine units are aliphatic diamine units having 6 to 12 carbon atoms, still more preferably, 90 to 100 mol% of the diamine units are aliphatic diamine units having 6 to 12 carbon atoms.

Among the above aliphatic diamines having 6 to 12 carbon atoms, from the viewpoint of strength under high temperature and high humidity conditions, it is preferable that the diamine units contain at least one constituent unit derived from a diamine selected from the group consisting of 1,6-hexanediamine, 2-methyl-1,5-pentanediamine, 1,8-octanediamine, 2-methyl-1,8-octanediamine, 1,9-nonanediamine, 1,10-decanediamine, 1,11-undecanediamine, and 1,12-dodecanediamine; more preferably, at least one constituent unit derived from a diamine selected from the group consisting of 2-methyl-1,8-octanediamine, 1,9-nonanediamine, 1,10-decanediamine, 1,11-undecanediamine, and 1,12-dodecanediamine; further preferably, at least one constituent unit derived from a diamine selected from the group consisting of 2-methyl-1,8-octanediamine, 1,9-nonanediamine, 1,10-decanediamine, and 1,11-undecanediamine; still more preferably, at least one constituent unit derived from a diamine selected from the group consisting of 2-methyl-1,8-octanediamine, 1,9-nonanediamine, and 1,10-decanediamine; and particularly preferably, at least one constituent unit derived from a diamine selected from the group consisting of 1,9-nonanediamine and 2-methyl-1,8-octanediamine.

When the diamine units contain both a constituent unit derived from 1,9-nonanediamine and a constituent unit derived from 2-methyl-1,8-octanediamine, from the viewpoint of strength under high temperature and high humidity conditions, it is preferable that the molar ratio of the constituent unit derived from 1,9-nonanediamine to the constituent unit derived from 2-methyl-1,8-octanediamine is in the range of 95/5 to 40/60, more preferably in the range of 90/10 to 45/55, and further preferably in the range of 90/10 to 50/50.

In some applications, it may also be preferable that the molar ratio of the constituent unit derived from 1,9-nonanediamine to the constituent unit derived from 2-methyl-1,8-octanediamine is in the range of 55/45 to 45/55.

The polyamide resin may also contain an aminocarboxylic acid unit. Examples of the amino carboxylic acid unit include units derived from: a lactam such as caprolactam and lauryllactam; and an amino carboxylic acid such as 11-aminoundecanoic acid and 12-aminododecanoic acid. The content of the aminocarboxylic acid unit in the polyamide resin is preferably 40 mol% or less, more preferably 20 mol% or less, with respect to the total of 100 mol% of the dicarboxylic acid units and the diamine units in the polyamide resin.

The polyamide resin may contain units derived from a terminal blocking agent. As the terminal blocking agent, a monofunctional compound having reactivity with a terminal amino group or a terminal carboxy group can be used. Specific examples include monocarboxylic acids (such as acetic acid, propionic acid, butyric acid, valeric acid, caproic acid, caprylic acid, lauric acid, tridecanoic acid, myristic acid, palmitic acid, stearic acid, and benzoic acid), acid anhydrides, monoisocyanates, monocarboxylic acid halides, monoesters, monoalcohols, and monoamines (such as butylamine, hexylamine, octylamine, decylamine, stearylamine, cyclohexylamine, and aniline).

As the polyamide resin, PA6T, PA9T, PA10T, PA12T, PA10T/10I, PA10T/10, PA10T/12, and PA10T/11 are preferable.

(Glass Transition Temperature Tg)

From the viewpoint of strength at high temperatures, the glass transition temperature Tg of the thermoplastic resin is preferably 100°C or higher, more preferably 110°C or higher, and further preferably 120°C or higher. From the viewpoint of moldability, it is preferably 280°C or lower, and more preferably 240°C or lower. The glass transition temperature Tg can be measured using a differential scanning calorimetry (DSC) apparatus according to the method described in the Examples.

(Melting point Tm)

From the viewpoint of strength at high temperatures, the melting point of the thermoplastic resin is preferably 200°C or higher, more preferably 230°C or higher, and further preferably 250°C or higher. From the viewpoint of moldability, it is preferably 350°C or lower, and more preferably 320°C or lower. The melting point Tm can be measured using a differential scanning calorimetry (DSC) apparatus according to the method described in the Examples.

(Inherent viscosity)

The inherent viscosity of the thermoplastic resin is preferably from 0.5 dl/g to 2.0 dl/g and more preferably from 0.7 dl/g to 1.5 dl/g, from the viewpoint of excellent mechanical strength or moldability. The inherent viscosity can be measured by measuring the time of flow of a solution thereof using, as a solvent, concentrated sulfuric acid at a concentration of 0.2 g/dl and a temperature of 30°C.

(Specific gravity)

The specific gravity can be measured in accordance with ISO 1183-1 (2019), Method A (water displacement method), using an electronic densimeter (model ED-120T) manufactured by Alphamirage Co., Ltd.

(Content of Thermoplastic resin)

From the viewpoint of mechanical strength, the content of the thermoplastic resin is preferably 80 mass% or more, more preferably 90 mass% or more, and may be 100 mass%, based on the total components excluding the continuous fibers in the composite material according to the present embodiment.

(Method for producing thermoplastic resin)

As the thermoplastic resin, a commercially available product may be used, or a resin subjected to modification treatment of a commercially available product may be used. A thermoplastic resin may be produced and used. As one example, the polyamide resin can be produced by a known method. For example, the resin can be produced by methods such as solution polymerization method or interfacial polymerization method using acid chloride and diamine as raw materials, melt polymerization method, solid phase polymerization method, or melt extrusion polymerization method using dicarboxylic acid and diamine as raw materials.

[Continuous fibers]

Continuous fibers refer to long fibers that are capable of being unwound. The fibers constituting the continuous fibers used in the composite material according to the present embodiment contain at least a group of fibers aligned along a first fiber direction. An example of such continuous fibers is a unidirectional fiber that is aligned only in the first fiber direction. Another example of such continuous fibers is a woven fabric or knitted fabric containing at least a group of fibers aligned in the first fiber direction and a group of fibers aligned in a second direction different from the first fiber direction.

The continuous fibers are not particularly limited as long as their flow initiation temperature is higher than that of the thermoplastic resin, and any type of continuous fiber can be used. Examples of the continuous fibers include inorganic fibers such as carbon fibers, glass fibers, silicon carbide fibers, alumina fibers, boron fibers, ceramic fibers, basalt fibers, and metal fibers (such as gold, silver, copper, iron, nickel, titanium, and stainless steel); synthetic fibers such as wholly aromatic polyester fibers, polyphenylene sulfide fibers, poly(p-phenylene benzobisoxazole) fibers, aramid fibers, polyoxymethylene fibers, polyethylene fibers, polysulfoneamide fibers, phenolic resin fibers, polyimide fibers, and fluorinated fibers; and natural fibers such as plant-derived fibers including kenaf and bamboo fibers. The continuous fibers may be surface-treated with at least one of a surface modifier such as a coupling agent and a bundling agent. Examples of the fabric include non-crimp fabric (NCF). As the continuous fibers, one kind of these may be used alone, or two or more may be used in combination. Among these, from the viewpoint of mechanical strength, it is preferable to contain at least one selected from the group consisting of carbon fibers, glass fibers, ceramic fibers, synthetic fibers, natural fibers, and metal fibers, and more preferable to contain carbon fibers.

(Strength)

The tensile strength of the continuous fibers is preferably from 2000 to 8000 MPa, and more preferably from 3000 to 6000 MPa, from the viewpoint of the strength of the composite material.

(Fiber diameter and Filament count)

The number average fiber diameter of the continuous fibers is preferably from 1 to 100 $\mu$m, more preferably from 3 to 50 $\mu$m, and further preferably from 5 to 15 $\mu$m.
The continuous fibers may be used according to the purpose, for example, those having a filament count of about 100 to 100,000. The number average fiber diameter and filament count of the continuous fibers can be observed, for example, by a scanning electron microscope.

(Fiber volume fraction (Vf))

In the composite material according to the present embodiment, the fiber volume fraction (Vf) of the continuous fibers is preferably 30% or more, more preferably 40% or more, and further preferably 45% or more from the viewpoint of mechanical strength; and is preferably 70% or less, more preferably 65% or less, and further preferably 60% or less from the viewpoint of design flexibility. The fiber volume fraction (Vf) is the percentage of the volume of the continuous fibers in the composite material relative to the total volume of the composite material. The volume of the continuous fibers in the composite material can be calculated from the weight and the specific gravity of the continuous fibers used in the production of the composite material, according to the method described in the Examples.
In the composite material according to the present embodiment, the total amount of the continuous fibers and the thermoplastic resin is preferably 80% by mass or more, more preferably 90% by mass or more, and may be 100% by mass.
As the continuous fibers, a commercially available product may be used as it is, or may be used after being subjected to surface treatment. Also, the continuous fibers may be so-called recycled products or reused products. The recycled products or reused products refer, for example, to those obtained by removing the matrix resin from the composite material.

[Other components]

The composite material according to the present embodiment may contain, without impairing the effects of the present invention, thermal stabilizers, light stabilizers, elastomers, lubricants, nucleating agents, crystallization retardants, hydrolysis inhibitors, antistatic agents, radical scavengers, matting agents, ultraviolet absorbers, flame retardants, inorganic substances other than continuous fibers, and the like.
Examples of the thermal stabilizer include phenol-based thermal stabilizers, phosphorus-based thermal stabilizers, sulfur-based thermal stabilizers, amine-based thermal stabilizers, copper-based thermal stabilizers, and derivatives thereof.
Examples of the phenol-based thermal stabilizer include 2,2-thiodiethylene bis[3-(3,5-di-tert-butyl-4-hydroxyphenyl)propionate], N,N'-hexamethylene bis[3-(3,5-di-tert-butyl-4-hydroxyphenyl)propionamide], triethylene glycol bis(3-tert-butyl-4-hydroxy-5-methylphenyl)propionate, hexamethylene bis(3-(3,5-di-tert-butyl-4-hydroxyphenyl)propionate), 3,9-bis[1,1-dimethyl-2-[β-({3-tert-butyl-4-hydroxy-5-methylphenyl)propionyloxy}]ethyl]-2,4,8,10-tetraoxaspiro [5.5]undecane, tris(3,5-di-tert-butyl-4-hydroxybenzyl)isocyanurate, and 1,3,5-trimethyl-2,4,6-tris(3,5-di-tert-butyl-4-hydroxybenzyl)benzene.
Examples of the phosphate-based thermal stabilizer include monosodium phosphate, disodium phosphate, trisodium phosphate, sodium hypophosphite, calcium hypophosphite, magnesium hypophosphite, manganese hypophosphite, triphenyl phosphite, trioctadecyl phosphite, tridecyl phosphite, trinonylphenyl phosphite, diphenyl isodecyl phosphite, tetrakis(2,4-di-tert-butylphenyl)-4,4'-biphenylene diphosphonite, tetrakis(2,4-di-tert-butyl-5-methylphenyl)-4,4'-biphenylene diphosphonite, bis(2,4-dicumylphenyl) pentaerythritol diphosphite, bis(2,6-di-tert-butyl-4-methylphenyl) pentaerythritol diphosphite, tris(2,4-di-tert-butylphenyl) phosphite, and 6-[3-(3-tert-butyl-4-hydroxy-5-methylphenyl)propoxy]-2,4,8,10-tetra-tert-butyldibenzo[d,f][1,3,2]dioxaphosphepine.

Examples of the sulfur-based thermal stabilizer include distearyl 3,3'-thiodipropionate, pentaerythritol tetrakis(3-laurylthiopropionate), 2-mercaptobenzimidazole, didodecyl 3,3'-thiodipropionate, ditridecyl 3,4'-thiodipropionate, and 2,2-bis[[3-(dodecylthio)-1-oxopropoxy]methyl]-1,3-propanediyl ester.

Examples of the amine-based thermal stabilizer include 4,4'-bis($\alpha,\alpha$-dimethylbenzyl)diphenylamine, N,N'-di-2-naphthyl-p-phenylenediamine, N,N'-diphenyl-p-phenylenediamine, N-phenyl-1-naphthylamine, N-phenyl-N'-isopropyl-p-phenylenediamine, N-phenyl-N'-(1,3-dimethylbutyl)-p-phenylenediamine, and N-phenyl-N'-(3-methacryloyloxy-2-hydroxypropyl)-p-phenylenediamine.

Examples of the copper-based thermal stabilizer include copper halides such as copper iodide and derivatives thereof.

Examples of lubricants include metal soaps, montanic acid waxes, polyolefin waxes, fatty acid amide waxes, and rice wax.

Examples of crystallization retardants include azine dyes such as nigrosine and its derivatives.

Examples of chain extenders include compounds having functional groups that react with amino or carboxyl end groups of the polyamide, such as 1,3-phenylene bisoxazoline, oxazolines, imidazolines, epoxies, isocyanates, maleimides, and acid anhydrides.

These and other additives may be contained singly or in combination of two or more.

Examples of the inorganic substances include carbon nanotubes, fullerenes, talc, wollastonite, zeolites, sericite, mica, kaolin, clay, pyrophyllite, silica, bentonite, aluminosilicates, silicon oxide, magnesium oxide, alumina, zirconium oxide, titanium oxide, iron oxide, calcium carbonate, magnesium carbonate, dolomite, calcium sulfate, barium sulfate, calcium hydroxide, magnesium hydroxide, aluminum hydroxide, glass beads, glass flakes, glass powder, ceramic beads, boron nitride, silicon carbide, carbon black, and graphite.

The amount of the other additives is not particularly limited as long as it does not impair the effect of the present invention, however, for example, it may be 0.01 to 100 parts by mass relative to 100 parts by mass of the thermoplastic resin.

[Properties of Composite material]

(Average thickness of the Composite material)

The average thickness of the composite material of the present invention is preferably 0.10 mm or more, more preferably 0.13 mm or more, from the viewpoint of mechanical strength. In addition, from the viewpoint of formability, the average thickness is preferably 0.30 mm or less, more preferably 0.25 mm or less, further preferably 0.22 mm or less, and may be 0.18 mm or less. The average thickness of the composite material can be measured by a method described in Examples.

(Peel force when used with stacked)

The composite material of the present embodiment exhibits high peel force between composite materials when stacked to form a laminate. This peel force can be evaluated based on the maximum peel strength. The maximum peel force can be measured by a method described in Examples described later. The maximum peel force of the composite material as measured in this manner is preferably 25 N/10 mm or more, more preferably 26 N/10 mm or more, further preferably 27 N/10 mm or more, and may be 30 N/10 mm or more in some cases.

<Method for Producing Composite material>

The composite material can generally be produced by mixing continuous fibers with thermoplastic resin in a molten state, preferably impregnating, and then solidifying the resulting melt. In the melt of the composite material, the thermoplastic resin is in a molten state, and the continuous fibers are usually not in a molten state. As such a production method, there is a method corresponding to a known method for producing so-called UD sheets or UD tapes (for example, the method described in JP 6890547 B).

To produce the composite material of the present embodiment (i.e., a composite material having a surface Kurtosis Rku of 3.0 or more), it is preferable to employ at least one of the first producing method for the first composite material (hereinafter also referred to as the "first production method") and the second manufacturing method for the second composite material (hereinafter also referred to as the "second production method").

[First production method]

A first production method according to the present embodiment is a method for producing a composite material containing a thermoplastic resin and continuous fibers, comprising: mixing a thermoplastic resin in a molten state and continuous fibers; discharging the obtained melt at a temperature higher than the glass transition temperature of the thermoplastic resin; and bringing the discharged melt into contact with a smooth-surfaced cooling element within 5 seconds to cool the melt to a temperature lower than the glass transition temperature of the thermoplastic resin and obtain the composite material.

(Timing for starting cooling)

In the first production method, the timing to start contacting the melt with the cooling element is when the melt is at a temperature higher than the glass transition temperature and solidification has not started.
The timing at which solidification of the melt begins depends on the temperature of the impregnation head, the glass transition temperature of the thermoplastic resin, and the like. Solidification usually begins 5 seconds after being discharged from the impregnation head. Therefore, in the first production method, the timing for starting cooling is set within 5 seconds. As the timing for starting cooling, a shorter time may be set, however, in such a case, it is necessary to either provide a smooth-surfaced cooling element in the immediate vicinity of the impregnation head or increase the line speed. By setting the timing for starting cooling in this manner, it becomes possible to reliably cool the melt before the solidification begins.
Then, by cooling the melt at a timing when solidification has not yet begun using a smooth-surfaced cooling element, that is, by cooling at a rate higher than natural cooling, the surface kurtosis Rku value of the composite material can be increased. From the viewpoint of achieving cooling at high-speed, the surface temperature of the cooling element is preferably 90°C or lower, more preferably 70°C or lower, and further preferably 50°C or lower. The smoothness of the surface of the cooling element is sufficient as long as it is at a level of smoothness that one skilled in the art would naturally understand, for example, the surface roughness Ra is 1 $\mu$m or less, preferably 0.5 $\mu$m or less, and more preferably 0.1 $\mu$m or less. The surface roughness Ra can be measured using a surface roughness tester.
The reason why the value of surface kurtosis Rku can be increased is not clear, but it is presumed that by the smooth-surfaced cooling element contacting the melt, the continuous fibers near the surface of the melt are realigned, and the matrix resin solidifies with the fibers appropriately positioned in the matrix resin. As a result, the tails evaluated by the surface kurtosis Rku is widely secured, and relatively, the peaks on the solidified matrix resin surface become prominent, causing the surface kurtosis Rku value to increase.
In the above first production method, it is preferable to use a cooling roll as the cooling element to cool the melt. By using a cooling roll, the cooling surface can be continuously brought into contact with the melt. The cooling roll may be used on one side of the melt or on both sides. A more preferable first production method is a method in which one surface of the melt is brought into contact with a cooling roll, and a gaseous coolant is brought into contact with a surface of the melt opposite to the surface of the melt which contacts the cooling roll.
Examples of the gaseous coolant preferably include air or an inert gas at a temperature of 40°C or below, more preferably 30°C or below, and further preferably 20°C or below. From the viewpoint of suppressing moisture intrusion into the melt, it is preferable that the gaseous coolant is a dehumidified coolant. From the viewpoint of improving cooling efficiency, it is preferable that the contact area between the coolant and the melt is larger than the contact area between the cooling roll and the melt.
In the first method, it is also possible to bring into contact with an additional cooling element, if necessary, for removing residual heat of the composite material.
As the cooling element, the cooling roll and the gaseous coolant may be used.

[Second production method]

A second production method describes a method for producing the composite material according to the present embodiment from an existing composite material, whereas the first production method explains a method for directly producing the composite material according to the present embodiment. This second production method includes a surface modification method in which the surface of an existing composite material is modified to increase the surface kurtosis (Rku) in the direction intersecting the first fiber direction.
Specifically, the second production method according to the present embodiment is a method for producing a composite material, the method comprising a step of bringing the composite material, which contains a thermoplastic resin and continuous fibers, into contact with a smooth-surfaced heating element while conveying the composite material in a direction aligned along a first fiber direction of the continuous fibers. A smooth-surfaced heating element is preferably a heating roll, and more preferably a pair of heating rolls. Also, it is preferable that at least one of the pair of heating rolls is a pressure roll, and it is more preferable that one is a pressure roll and the other is a fixed roll.

In the second production method, nipping with the pair of heating rolls is preferable. The nip pressure is not particularly limited, but it is preferable to apply pressure uniformly to the composite material.

The surface temperature of the heating element is not limited as long as at least a part of the thermoplastic resin can be melted, but is preferably 50°C or higher, more preferably 80°C or higher, further preferably 120°C or higher, and the upper limit may be, for example, 350°C or lower or 340°C or lower. The smoothness of the surface of the heating element is equivalent to the smoothness of the surface of the cooling element described above.

In the second production method, the speed at which the composite material is conveyed is not particularly limited, however, from the viewpoint of more effectively achieving the effects of the present invention, it is preferably in the range of 0.10 to 2.0 m/min, and more preferably in the range of 0.15 to 1.5 m/min.

According to the above-described second production method, by the composite material contacting the heating element, at least a part of them softens, and the continuous fibers are realigned. As a result, the surface kurtosis (Rku) in the direction intersecting the first fiber direction can be increased.

As the method for producing the composite material according to the present embodiment, the second production method may be employed after employing the first production method, and it is preferable to employ the second production method after employing the first production method.

<Molded body>

The composite material of the present embodiment can be further shaped into an industrially useful form by using a known method. Examples of applicable methods include: press molding, in which a plurality of composite materials may be stacked to form a laminate and the laminate is sandwiched between molds and subjected to heating and pressing; overmolding, in which another material is injection-molded simultaneously with press molding; tape winding and sheet winding molding, in which the composite material is wound around a cylindrical mold and then heated and pressed; and automatic tape layup or automatic fiber placement, in which multiple layers of the composite material are automatically stacked using an automatic lamination device. In this manner, a molded body according to the present embodiment can be obtained.

The molded body according to the present embodiment is composed of the composite material according to the present embodiment described above. Here, as described above, the composite material according to the present embodiment exhibits excellent peel force when used with stacked. Therefore, it is preferable that the molded body according to the present embodiment is a laminate obtained by stacking two or more layers of the composite material. A heat treatment may be performed on such a laminate, a pressure treatment may be performed, or both a heat treatment and a pressure treatment may be performed. One example of such a laminate is a laminate in which a plurality of composite materials are stacked so that the first fiber directions of the respective composite materials intersect, and another example is a laminate in which a plurality of composite materials are stacked so that the first fiber directions of the respective composite materials are parallel.

(Applications of the Composite Material and Molded Body)

The composite material of the present embodiment can be used, in particular, as a UD tape or as an organo sheet. Further, the composite material and molded body of the present embodiment can be effectively used in a wide range of fields such as general industrial materials, electrical and electronic fields, civil engineering and construction fields, transportation equipment fields, and leisure fields. In particular, in the field of transportation equipment such as aircraft, UAM (Urban Air Mobility), drones, automobiles, railways, and ships, it can be effectively used as a member forming a main structure.

For example, housings for personal computers, displays, office automation equipment, mobile phones, portable information terminals, digital video cameras, optical devices, audio equipment, air conditioners, lighting equipment, toys, and other home appliances; electrical and electronic device parts such as trays, chassis, and battery cases; components for civil engineering and construction structures (buildings, roads, bridges, waterways, and embankments), such as columns, panels, and reinforcing members; industrial parts such as blades for wind power generators; exterior or body parts such as various members, frames, hinges, arms, axles, wheel bearings, beams, pillars, supports, and rails; exterior components such as bumpers, moldings, undercovers, engine covers, fairings, spoilers, cowl louvers, and aero parts; interior components such as instrument panels, seat or tape frames, door trims, pillar trims, steering wheels, and various modules; automotive or motorcycle parts including front bodies, underbodies, various pillars, members, frames, beams, supports, rails, hinges, battery trays for electric vehicles, motor parts, CNG tanks, gasoline tanks, fuel pumps, air intakes, intake manifolds, carburetor main bodies, carburetor spacers, various piping, and valves; aircraft parts such as landing gear pods, winglets, spoilers, edges, rudders, elevators, fairings, and ribs; leisure parts such as inner soles and outsoles for sports shoes, racket frames and grommets, golf club heads and sleeves, fishing reels and rods, boat screws, bicycle suspensions, gears, saddles, and bottle cages.

Examples

Hereinafter, the present invention will be specifically described with reference to Examples and Comparative Examples, but the present invention is not limited thereto.

The composite materials according to the Examples and Comparative Examples were prepared as described below and evaluated according to the evaluation methods described later.

[Production Example 1]

4,861 g of 1,9-nonanediamine, 4,861 g of 2-methyl-1,8-octanediamine, 10,051 g of terephthalic acid (1,9-nonanediamine : 2-methyl-1,8-octanediamine : terephthalic acid = 30.7 : 30.7 : 60.5 (molar ratio)), 225 g of benzoic acid, 20 g of sodium hypophosphite, and 5,000 g of water were charged into an autoclave, and the atmosphere was replaced with nitrogen. The internal temperature was raised to 200°C over 2 hours. At this time, the autoclave was increased to 2 MPa. Thereafter, the reaction was carried out for 2 hours while gradually releasing water vapor and maintaining the pressure at 2 MPa. Then, over 30 minutes, the pressure was lowered to 1.2 MPa to obtain a prepolymer. This prepolymer was pulverized and then dried at 120°C under reduced pressure for 12 hours. This was subjected to solid-phase polymerization under a condition of 230°C and 13.3 Pa for 10 hours to obtain PA9T.

Subsequently, the PA9T obtained in the production example was evaluated as follows.

[Measurement of Melting point and Glass transition temperature]

The melting point of the PA9T obtained in Production Example 1 was determined using a differential scanning calorimeter (DSC7020), manufactured by Hitachi High-Tech Science Corp., by identifying the peak temperature of the endothermic peak that appears when the temperature is raised from 30°C to 360°C at a rate of 10°C/min under a nitrogen atmosphere, and taking this peak temperature as the melting point (°C). In the case where multiple endothermic peaks were observed, the peak temperature of the highest-temperature endothermic peak was taken as the melting point.

Thereafter, after holding at a temperature 30°C higher than the melting point for 10 minutes to completely melt the sample, the sample was cooled to 40°C at a rate of 10°C/min and held at 40°C for 10 minutes. Then, the sample was again heated to a temperature 30°C higher than the melting point at a rate of 10°C/min, and the midpoint of the stepwise change in the DSC curve was defined as the glass transition temperature.

[Example 1]

Three bundles of carbon fiber bundles as the continuous fibers (Toray Industries, Inc., "T700S C 12K 50C", filament count: 12,000, number-average fiber diameter: 7 μm, tensile strength: 4900 MPa, specific gravity: 1.80) were unwound from multiple creels (bobbin), passed through an opening area to align them unidirectionally, and then supplied while being drawn through the impregnation head (crosshead die).

On the other hand, the PA9T (1,9-nonanediamine : 2-methyl-1,8-octanediamine : terephthalic acid = 25:25:50 (molar ratio); crystalline resin; inherent viscosity: 0.90 dl/g; melting point: 264°C; glass transition temperature: 125°C; specific gravity: 1.14) obtained in Production Example 1 was fed into an extruder, which has the extruder having a feed section, a compression section, and a metering section, connected to the impregnation head. The melt of PA9T was supplied to the impregnation head, which was set to 340°C, under the conditions of feed section temperature: 310°C, compression section temperature: 340°C, and metering section temperature: 340°C.

The melt of PA9T supplied by the extruder is impregnated into the continuous fibers in the impregnation head, forming a melt of composite material, and the formed melt of composite material is discharged from the gate of the impregnation head at a line speed of 1 m/min (= 16.7 mm/sec). The impregnation head was installed so that the gate faced in the horizontal direction. The size of the gate opening was set to a width of 25 mm and a height of approximately 0.15 mm. It was confirmed that the melt of the composite material immediately after discharge was at a temperature higher than the glass transition temperature of PA9T, specifically at 300°C. The melt of PA9T which did not contribute to the formation of the composite material was collected without contacting the first cooling roll, as described later.

(First cooling process)

At 0.9 seconds after the start of discharge from the gate, one side of the melt of the composite material discharged from the gate was brought into contact with the first cooling roll, which served as a smooth-surfaced cooling element, while the opposite side of the melt of the composite material was brought into contact with 20°C dehumidified air used as a gaseous coolant.

The first cooling roll was installed on the transport line of the melt of the composite material, so that a contact surface was formed at a position 15 mm from the gate of the impregnation head, and installed below the transport line in the vertical direction. Also, the surface temperature of the first cooling roll was set to 30°C.

The nozzle for supplying the gaseous coolant was positioned 5 mm away from the transport line of the melt of the composite material. The size of the nozzle opening was 25 mm for the dimension (width) in the horizontal direction perpendicular to the transport direction of the melt of the composite material, and 2 mm for the dimension (vertical) in the direction parallel to the transport direction. The discharge velocity of the gaseous coolant from the nozzle was set to 9 m/s.

It was confirmed that, as a result of this cooling process, the melt of the composite material was cooled to a temperature below the solidification temperature of the thermoplastic resin and solidified.

(Second cooling process)

Subsequently, the composite material obtained by solidification was cooled using a second cooling roll. The second cooling roll was installed on the transport line downstream of the first cooling roll, specifically positioned so that its contact surface was formed 190 mm from the gate of the impregnation head, and installed below the transport line in the vertical direction. The position 190 mm from the gate of the impregnation head corresponded to a timing of 11.4 seconds after the start of discharge from the gate. By this second cooling process, the rough heat was removed from the composite material.

The composite material was wound into a roll by a take-up machine and a winding machine provided downstream in the transport direction. The produced composite material (composite material before heating process) had a width of 25 mm, a thickness of 0.15 mm, and a fiber volume fraction (Vf) of 50%.

(Heating process)

The composite material wound into a roll as described above was nipped while being conveyed at a speed of 1 m/min toward the heating roll, thereby producing the composite material according to Example 1. As heating rolls, a heatable fixed roll and a heatable pressure roll were used. The fixed roll was installed below the transport line in the vertical direction, and the pressure roll was installed above the transport line in the vertical direction. The surface temperature of each roll was set to 150°C. The composite material according to Example 1 had a width of 25 mm, a thickness of 0.15 mm, and a fiber volume fraction (Vf) of 50%.

[Example 2]

Except that the heating process was omitted, the composite material was produced in the same manner as in Example 1.

[Example 3]

Except that the height of the gate opening of the impregnation head was changed to approximately 0.20 mm and the transport speed during the heating process was changed to 0.2 m/min, the composite material was produced in the same manner as in Example 1.

[Example 4]

Except that the heating process was omitted, the composite material was produced in the same manner as in Example 3.

[Example 5]

Except that the number of carbon fiber bundle used as the continuous fibers was changed to five, the width and height of the gate opening of the impregnation head were changed to 20 mm and approximately 0.20 mm, respectively, and the transport speed during the heating process was changed to 0.2 m/min, the composite material was produced in the same manner as in Example 1.

[Comparative Example 1]

Except that the first cooling process and the heating process were omitted, the composite material was produced in the same manner as in Example 1.

[Comparative Example 2]

Except that the first cooling process and the heating process were omitted, the composite material was produced in the same manner as in Example 5.

<Evaluation Method>

Subsequently, the composite materials obtained in the Examples and Comparative Examples were evaluated as follows.

[1. Measurement of Average Thickness of the Composite Material]

The thicknesses at three different arbitrary points of the composite materials obtained in the Examples and Comparative Examples were measured using a micrometer (TG-02U, manufactured by Custom Co., Ltd.), and the average thickness was calculated.

[2. Measurement of Fiber volume fraction (Vf)]

The fiber volume fraction (Vf) of the composite materials obtained in the Examples and Comparative Examples was calculated using Equation (1), by first measuring the mass WO of the composite material, then heating the composite material in air at 500°C for 4 hours to burn off the thermoplastic resin component, and measuring the remaining mass W1 of the continuous fibers.

$$Vf\,(vol\%) = (W1\,/\,\rho f)\,/\,\{\,W1\,/\,\rho f + (W0 - W1)\,/\,\rho r\,\} \times 100\,...\,(1)$$

$\rho f$: density of the continuous fibers (g/cm$^3$)
$\rho r$: density of the thermoplastic resin (g/cm$^3$)

[3. Measurement of Surface kurtosis (Rku)]

For each of the composite materials obtained in the Examples and Comparative Examples, the surface kurtosis (Rku) was measured in accordance with JIS B 0601:2001. A stylus-type surface roughness measurement instrument (Surfcorder SE700, manufactured by Kosaka Laboratory Ltd.) was used as the measuring instrument. The main surface of the composite material subjected to measurement was the surface contacted by the second cooling roll. The measurement was conducted in a direction perpendicular to the first fiber direction. The measurement magnification was set to 1000x, the measurement speed to 0.2 mm/s, the cutoff value to 0.25 mm, and the evaluation length to 1.250 mm. The average value of measurements at three arbitrary points within the measurement area was adopted as the surface kurtosis Rku. The measurement area was set within 5 mm from the center of the tape.

[4. Evaluation of Peel force: Measurement of Peel Strength]

(4-1. Preparation of test piece)

Using each composite material obtained in the Examples and Comparative Examples, test pieces for the peel adhesion strength test were prepared as follows.
First, two rectangular pieces measuring 10 mm in the short side and 150 mm in the long side were cut out from the composite material. The direction of the long side of the rectangular pieces coincided with the fiber direction in the composite material.
Subsequently, one imide film (UPIPEX, manufactured by UBE Industries, thickness: 50 $\mu$m) was inserted between two rectangular pieces stacked with each other, from one end of the long side direction of the rectangular pieces up to a position 100 mm along the long side, and Material A was produced. In the Material A, in the region where the polyimide film did not reach, the two rectangular pieces were in contact with each other (contact surface). At the contact surface, the sides of the two rectangular pieces, on which the surface kurtosis Rku was measured, faced each other.

Subsequently, a laminate was obtained by placing, in order, 250 mm square (thickness: 3.0 mm) of a first stainless steel plate, 240 mm square of a silicone rubber (thickness: 1.3 mm), an imide film, Material A, an imide film, and 250 mm square (thickness: 3.0 mm) of a second stainless steel plate. In this laminate, the contact surface of the Material A was positioned approximately at the center of the stainless steel plates. Therefore, a part of the Material A was exposed outside the side surface of the two stainless steel plates.

Then, the above laminate was pressed using a press machine with a cylinder diameter of 113 mm ("AYS.10", Shinto Metal Works). The press conditions were as follows: press surface set temperature (molding temperature): 300°C; preheating time under pressing at a gauge pressure of 0.80 MPa: 1 minute; pressing time at a gauge pressure of 5 MPa after preheating: 2 minutes.

Thereafter, Material A was taken out from the pressed laminate, and then, a first imide film was pulled out from the Material A. As a result, a test piece in which the contact surface (the region 50 mm from one end) became an adhesion surface, was obtained. In this test piece, the region other than the adhesion surface was a free end (an exposed end with respect to the adhesion surface).

(4-2. Measurement of peel strength)

Using the test piece obtained in the above section 4-1, a peel adhesion strength test (90° peel) was conducted in accordance with JIS K 6854-1:1999. As a tensile testing machine, an "ASG-X" manufactured by SHIMADZU Corporation was used. The test piece was fixed to a SUS plate using an adhesive tape ("Hyper Joint", manufactured by Nitto Denko Corporation), and the test piece fixed to the SUS plate was fixed to a tensile testing machine. In the tensile test, the free end of the test piece was gripped using a clamp attached to the tensile testing machine. The crosshead speed of the tensile testing machine was set to 50 mm per minute. Then, from the peel strength [N/10 mm] obtained as a result of the peel adhesion strength test, the maximum peel force [N/10 mm] was identified.

The test results are shown in Table 1 below.

[Table 1]

Table 1

| | | Example 1 | Example 2 | Example 3 | Example 4 | Example 5 | Comparative Example 1 | Comparative Example 2 |
|---|---|---|---|---|---|---|---|---|
| Constituents | Thermoplastic Resin | PA9T | PA9T | PA9T | PA9T | PA9T | PA9T | PA9T |
| | Continuous fibers | CF | CF | CF | CF | CF | CF | CF |
| | Vf [%] | 50 | 50 | 40 | 40 | 56 | 50 | 56 |
| | Thickness [mm] | 0.15 | 0.15 | 0.20 | 0.20 | 0.20 | 0.15 | 0.20 |
| | Width [mm] | 25 | 25 | 25 | 25 | 20 | 25 | 20 |
| Production method | First cooling | Presence | Presence | Presence | Presence | Presence | Absence | Absence |
| | Second cooling | Presence | Presence | Presence | Presence | Presence | Presence | Presence |
| | Heating | Presence | Absence | Presence | Absence | Presence | Absence | Absence |
| Evaluation | Rku | 4.11 | 3.14 | 3.37 | 3.08 | 4.57 | 2.72 | 2.64 |
| | Maximum peel force [N/10mm] | 32.1 | 28.7 | 32.0 | 29.0 | 34.5 | 24.0 | 21.6 |

In Table 1, "CF" means carbon fibers "T700S C 12K 50C" manufactured by Toray Industries, "Vf" is the fiber volume fraction (%), and "Rku" is the surface kurtosis with a normal distribution of 3.0.

From Table 1, it was found that composite materials with surface kurtosis Rku values of 3.0 or higher have larger maximum peel force values and exhibit superior peel force when used with stacked.

On the other hand, in composite materials with surface kurtosis Rku values less than 3.0, a result was obtained in which the maximum peel force was low, and the peel force when used with stacked could not be said to be sufficiently superior.

Industrial Applicability

The composite material and molded body of the present invention are useful when used in various applications where peel force when used with stacked is required, and in particular, they are useful when used as UD tape or organo sheet.

**Claims**

1. A composite material comprising:

   a thermoplastic resin; and
   continuous fibers,
   wherein fibers constituting the continuous fibers comprise at least a group of fibers aligned along a first fiber direction which runs along a single direction,
   wherein a surface kurtosis (Rku) in a direction intersecting the first fiber direction, on at least one main surface among a first main surface and a second main surface of the composite material, is 3.0 or more.

2. The composite material according to claim 1,
   wherein the continuous fibers are unidirectional fibers aligned only along the first fiber direction.

3. The composite material according to claim 1 or 2,
   wherein the thermoplastic resin comprises a polyamide resin.

4. The composite material according to claim 3,
   wherein the polyamide comprises a semi-aromatic polyamide resin.

5. The composite material according to any one of claims 1 to 4,
   wherein the continuous fibers comprise at least one selected from the group consisting of carbon fibers, glass fibers, ceramic fibers, synthetic fibers, natural fibers, and metal fibers.

6. The composite material according to any one of claims 1 to 5,
   wherein the continuous fibers comprise carbon fibers.

7. The composite material according to any one of claims 1 to 6,
   wherein a fiber volume fraction (Vf) of the composite material is 30% or more and 70 % or less.

8. The composite material according to any one of claims 1 to 7,
   wherein a thickness of the composite material is 0.10 mm or more and 0.30 mm or less.

9. A molded body composed of the composite material according to any one of claims 1 to 8.

10. A method for producing a composite material comprising a thermoplastic resin and continuous fibers, comprising:

    mixing a thermoplastic resin in a molten state and continuous fibers;
    discharging the obtained melt at a temperature higher than a glass transition temperature of the thermoplastic resin; and
    bringing the discharged melt into contact with a smooth-surfaced cooling element within 5 seconds to cool the melt to a temperature lower than the glass transition temperature of the thermoplastic resin and obtain the composite material.

**11.** The method for producing a composite material according to claim 10,
wherein the melt is cooled using a cooling roll as the cooling element.

**12.** The method for producing a composite material according to claim 11,
wherein a gaseous coolant is brought into contact with a surface of the melt opposite to the surface of the melt which
contacts the cooling roll.

## INTERNATIONAL SEARCH REPORT

| International application No. |
| --- |
| **PCT/JP2024/029181** |

| A. | CLASSIFICATION OF SUBJECT MATTER |
| --- | --- |

*C08J 5/04*(2006.01)i
FI: C08J5/04 CFG

According to International Patent Classification (IPC) or to both national classification and IPC

| B. | FIELDS SEARCHED |
| --- | --- |

Minimum documentation searched (classification system followed by classification symbols)

C08J5/04-5/10; C08J5/24; B29B11/16; B29B15/08-15/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2012-031371 A (DAICEL POLYMER LTD.) 16 February 2012 (2012-02-16) | 1-6, 8-11 |
| | claims, paragraphs [0028], [0034]-[0048], fig. 1-2, table 1 | |
| Y | | 12 |
| A | | 7 |
| X | JP 2023-078063 A (MITSUBISHI ENGINEERING-PLASTICS CORPORATION) 06 June 2023 (2023-06-06) | 1-11 |
| | claims, examples, paragraphs [0043], [0045]-[0047] | |
| Y | | 12 |
| X | JP 2019-099603 A (TORAY INDUSTRIES, INC.) 24 June 2019 (2019-06-24) | 1-3, 5-11 |
| | claims, paragraphs [0067]-[0071], table 1 | |
| Y | | 12 |
| A | | 4 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 September 2024** | **08 October 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
| --- |
| **PCT/JP2024/029181** |

### C. DOCUMENTS CONSIDERED TO BE RELEVANT

| Category* | Citation of document, with indication, where appropriate, of the relevant passages | Relevant to claim No. |
| --- | --- | --- |
| X | JP 2008-246782 A (TEIJIN TECHNO PRODUCTS LIMITED) 16 October 2008 (2008-10-16) <br> claims, examples 1-2, paragraphs [0040]-[0042], fig. 1 | 1-3, 5-6, 8-11 |
| Y | | 12 |
| A | | 4, 7 |
| Y | JP 51-14533 B1 (MITSUBISHI YUKA KABUSHIKI KAISHA) 10 May 1976 (1976-05-10) <br> p. 2, left column, lines 20-32 | 12 |
| Y | US 11441001 B1 (UNIVERSITY OF TENNESSEE RESEARCH FOUNDATION) 13 September 2022 (2022-09-13) <br> example 1 | 12 |
| A | JP 2002-103365 A (SEKISUI CHEMICAL CO., LTD.) 09 April 2002 (2002-04-09) <br> entire text, all drawings | 1-12 |

Form PCT/ISA/210 (second sheet) (July 2022)

**INTERNATIONAL SEARCH REPORT**
Information on patent family members

International application No.

**PCT/JP2024/029181**

| Patent document cited in search report | | | Publication date (day/month/year) | Patent family member(s) | | | Publication date (day/month/year) |
|---|---|---|---|---|---|---|---|
| JP | 2012-031371 | A | 16 February 2012 | CN | 102971363 | A | |
| | | | | KR | 10-2013-0123295 | A | |
| JP | 2023-078063 | A | 06 June 2023 | (Family: none) | | | |
| JP | 2019-099603 | A | 24 June 2019 | (Family: none) | | | |
| JP | 2008-246782 | A | 16 October 2008 | (Family: none) | | | |
| JP | 51-14533 | B1 | 10 May 1976 | (Family: none) | | | |
| US | 11441001 | B1 | 13 September 2022 | (Family: none) | | | |
| JP | 2002-103365 | A | 09 April 2002 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022150747 A
- WO 2020196600 A1
- WO 2017203893 A1
- JP H05098042 A
- JP 2000102978 A
- JP 6890547 B